# EUROPEAN PATENT APPLICATION

(11) **EP 1 498 695 A2**
(43) Date of publication of application: **19.01.2005**
(21) Application number: 04016698.5
(22) Date of filing: 15.07.2004
(51) Int. Cl.: G01C 21/34

(54) **Vehicle navigation method**

(30) Priority: 16.07.2003 JP 2003197985
(71) Applicant: AISIN AW CO., LTD., Anjo, Aichi 444-1192 (JP)
(72) Inventor: Ishibashi, Noboru, Okazaki Aichi 444-8564 (JP); Yamada, Kunihiro, Okazaki Aichi 444-8564 (JP)
(74) Representative: VOSSIUS & PARTNER

(57) **Abstract**

In travel along a particular route, when the vehicle encounters a location which traffic information indicates as having a road traffic restriction, if the vehicle can nevertheless pass through that location, then information indicating the location, the time at which the vehicle encountered the location, the length of road so restricted, and time required to pass through the location, are recorded as history information in a storage device for the purpose of future use in traveling the same route.

## Description

This application claims, under 35 USC 119, priority of Japanese Application No. 2003-197985 filed July 16, 2003.

The disclosure of Japanese Patent Application No. 2003-197985 filed on July 16, 2003 including the specification, drawings and abstract is incorporated herein by reference in its entirety.

The present invention relates to a vehicle navigation method.

A conventional navigation method is disclosed in JP-A-11-160081. This navigation method involves receiving traffic information from a vehicle information and communication system wherein the traffic information includes lane congestion information indicating traffic congestion in one of two lanes of an expressway, one of which is connected to exit lanes. The disclosed method further includes determining whether the congestion is in one or both of the two lanes, on the basis of the congestion information, and controlling navigation in accordance with the results of the determination.

In the navigation method described above, although traffic information provided by the vehicle information and communication system includes lane congestion information as described above, the lane congestion information does not necessarily include all information insufficient detail. Because of unavailability of all information in detail, for example, even when the congested lane information indicates that a lane other than a lane connected to exit lanes is congested, there is the possibility that, actually, the lane not connected to exit lanes is passable. When the lane congestion information indicates that two lanes of an expressway are congested, the lane congestion information does not include information indicating which one of the two lanes connecting to exit lanes is congested, and thus there is a possibility that one of the two lanes connecting to the exit lanes is passable. As for a road for which lane congestion indication information is not provided, it is impossible to know whether or not that road is congested until the vehicle actually enters the road.

In view of the above, it is an object of the present invention to provide a vehicle navigation method in which, when a vehicle travels along a particular route, if the vehicle passes through a location with a road traffic restriction, information associated with the location having the road traffic restriction is recorded as traffic restriction history for the purpose of future use in traveling the same route.

It is another object of the present invention to provide a vehicle navigation method in which, when a vehicle travels along a route for which no traffic information is provided, if the vehicle encounters a location that is difficult to pass through, information associated with that location is recorded as traffic restriction history for the purpose of future use in traveling the same route.

To achieve the forgoing objects, in one aspect the present invention provides a vehicle navigation method comprising the steps of recording traffic restriction history information such that when a vehicle travels along a particular route, if the vehicle passes through a location having a road traffic restriction, information associated with that location is recorded as the traffic restriction history information, and when the vehicle again travels along the same route toward that same location, after the information has been recorded, a passable route is searched for, not only on the basis of current road traffic restriction information, but also taking into account the traffic restriction history information.

In this vehicle navigation method, as described above, when a vehicle travels along a particular route, if the vehicle passes through a location having a traffic restriction, information associated with that location is recorded as the traffic restriction history. When the vehicle again travels along the route toward that same location, after the traffic restriction history information has been recorded, a passable route is searched for, not only on the basis of current road traffic restriction information, but also taking into account the traffic restriction history for that location. This makes it possible to pass through a location even where current information indicates imposition of a traffic restriction, if the traffic restriction history indicates that the road is passable.

In another aspect, the present invention provides a vehicle navigation method comprising the steps of recording traffic restriction history information such that when a vehicle travels along a particular route, if the vehicle passes through a location that traffic restriction information indicates as having a traffic restriction, information associated with that location is recorded as the traffic restriction history, and in searching for a route when the vehicle travels again along the route toward the same location, after traffic restriction history has been recorded, if road traffic restriction information provided at this time is identical with the traffic restriction history, a passable route is searched for on the basis of the traffic restriction history.

In this vehicle navigation method, when a vehicle travels along a particular route, if the vehicle passes through a location that road traffic restriction information indicates as being impacted by a road traffic restriction, information associated with that location is recorded as the traffic restriction history. When the vehicle again travels along that route toward the same location, after the traffic restriction history information has been recorded, if current traffic restriction information is identical with the traffic restriction history, a search for a passable route is made on the basis of the traffic restriction history. This makes it possible to pass through a location which current traffic restriction information indicates as being impacted by a traffic restriction, if the traffic restriction history information indicates that the road is passable.

In the vehicle navigation method according to the present invention, the traffic restriction history may include information indicating the time at which the location was impacted with the traffic restriction and may also include information indicating the length of time needed to pass through the location with the traffic restriction.

In another aspect, the present invention provides a vehicle navigation method comprising the steps of recording traffic restriction history information such that when a vehicle travels along a route for which traffic information is not provided, if the vehicle encounters a location that is difficult to pass through (a restriction or delay), information indicating the location and the time at which the vehicle encountered the delay or restriction at that location is recorded as the traffic restriction history, and when the vehicle again travels along that route toward the same location, after the traffic restriction history information has been recorded, a passable route is determined by a search on the basis of the traffic restriction history.

In this vehicle navigation method, when a vehicle travels along a route for which traffic information is not provided, if the vehicle encounters a location that is difficult to pass through because of, for example, congestion, construction or an accident, information indicating the location and the time at which the vehicle encountered the problem is recorded as the traffic restriction history. When the vehicle again travels along that route toward the same location, after the traffic restriction history information is recorded, a search is conducted for a passable route on the basis of the traffic restriction history. This is a great convenience to a user driving a route for which traffic information is not provided.
An embodiment of the present invention is described below with reference to the drawings.

Fig. 1 is a block diagram of an embodiment of the present invention;

Fig. 2 is a part of a flow chart of a main control program executed by a microcomputer as shown in Fig. 1;

Fig. 3 is another portion of the flow chart of the main control program;

Fig. 4 is still another portion of the flow chart of the main control program; and

Fig. 5 is a flow chart of an interrupt control program executed by the microcomputer shown in Fig. 1.

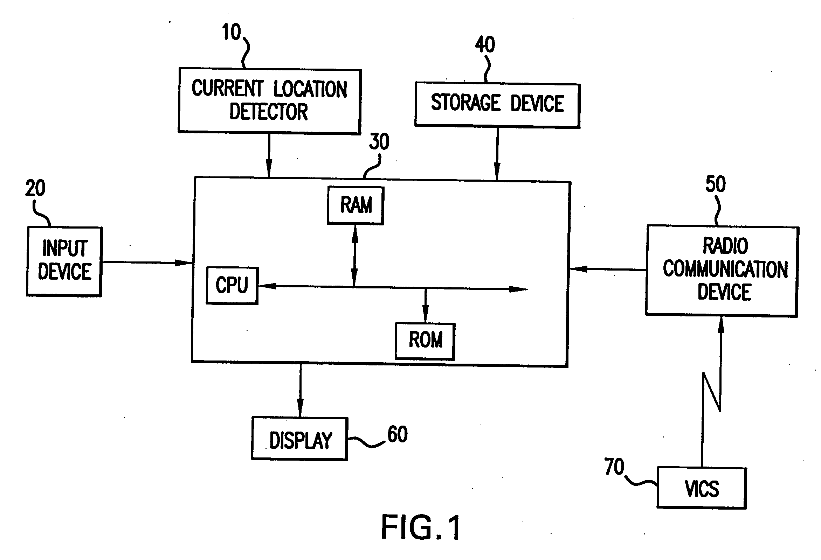

As shown in Fig. 1 the vehicle navigation apparatus includes a current location detector 10 including a GPS receiver for receiving a radio wave transmitted from global positioning system (GPS) satellites and for detecting the current location of a vehicle and the current time on the basis of the received radio signal.

The vehicle navigation apparatus also includes an input device 20, in the form of a portable remote controller, for transmitting necessary information (such as information specifying the scale of a map or a map display command) to a receiver unit (not shown) of a microcomputer 30 (that will be described later). Instead of the remote controller, a touch panel may be disposed on the surface of a liquid crystal display 60 (that will be described later).

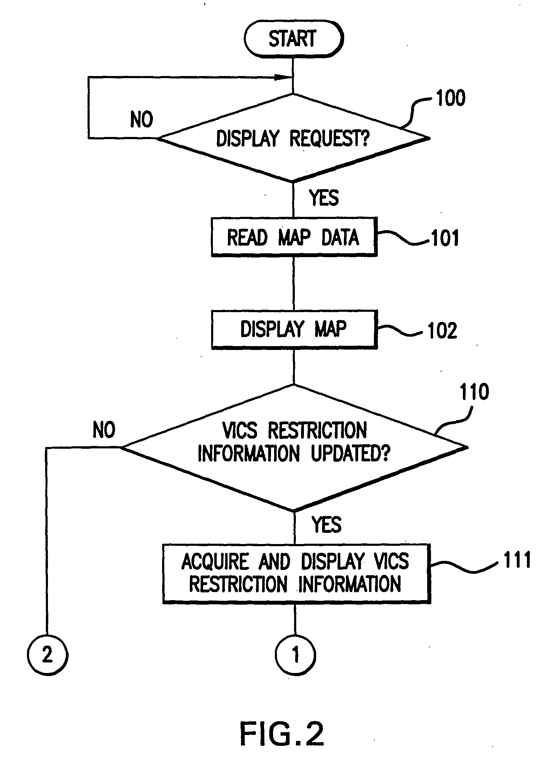

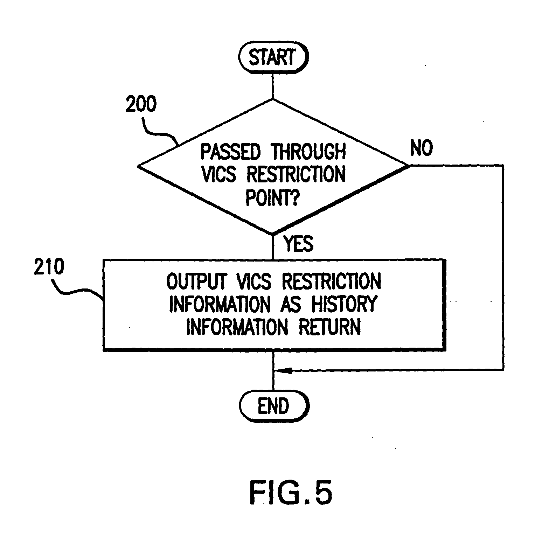

The vehicle navigation apparatus further includes a microcomputer 30, a storage device 40, a radio communication device 50, and the display 60. The microcomputer 30 includes, in addition to the receiver unit described above, a CPU, a RAM, and a ROM, which components are connected with each other via a bus line. The CPU of the microcomputer 30 executes the main control program according to the flow charts shown in Figs. 2 to 4 and also executes the interrupt control program shown in Fig. 5. By executing the main control program, the microcomputer 30 performs various tasks including displaying the location of the vehicle on a map and searching for a passable route, on the basis of information output from various components, including information indicating the current location of the vehicle output from the current location detector 10, information indicating an operation performed using the input device 20, information output from the storage device 40, and information output from the radio communication device 50. Furthermore, by executing the interrupt control program, the microcomputer 30 stores current traffic information supplied from an external source, e.g., a vehicle information and communication system 70, usually a stationary information center.

Although in the present embodiment the receiver unit is internal to the microcomputer 30, the receiver unit may be an external component, i.e., outside the microcomputer 30. The operation of the microcomputer 30 starts when power is supplied from a battery via an ignition switch of the vehicle. When the operation of the microcomputer 30 starts, the CPU starts executing the main control program described above. If the current location detected by the current location detector 10 coincides with a location which current traffic information indicates as having a traffic restriction, the microcomputer 30 starts executing, by using the CPU, the interrupt control program. The main control program and the interrupt control program are written in advance in the ROM of the microcomputer 30 such that they are readable by the microcomputer 30.

A hard drive may be used as the storage device 40 in which map data is stored in the form of a database such that the map data is readable by the microcomputer 30. The radio communication device 50 receives road traffic information from the external source 70 and transfers the received road traffic information to the microcomputer 30.

The display 60 displays, under the control of the microcomputer 30, data necessary for guidance in driving the vehicle. The display 60 includes a display panel such as a liquid crystal panel and is disposed on the instrument panel located in the passenger compartment of the vehicle.

The external source 70 transmits road traffic information including information identifying traffic restrictions due to congestion, accidents, and construction, via radio beacons and/or light beacons, and the external source 70 also transmits such information by means of FM multiplex broadcasting via FM broadcast stations. Radio beacons are installed on expressways and light beacons are installed on main roads. FM broadcast stations are installed at various locations.

Assuming that a vehicle has been equipped with a navigation system in the above-described manner and that, before the vehicle starts to run at this time, the interrupt control program has been repeatedly executed according to the flow chart shown in Fig. 5 when the vehicle was driven a plurality of times in the past. As the vehicle travels, each time the current location detected by the current location detector 10 comes into coincidence with a location that traffic information provided by the external source 70 indicates as being under a traffic restriction, the microcomputer 30 executes, using the CPU therein, the interrupt control program according to the flow chart shown in Fig. 5. In each execution of the interrupt control program, it is determined in step 200 whether the vehicle has passed through the location that the traffic information indicates as being under a traffic restriction (hereinafter, such a location will be referred to simply as a "traffic-restricted point").

In a case in which the vehicle cannot pass through a traffic-restricted point, and takes a bypass route to avoid the traffic-restricted point, the current location detector 10 does not detect the traffic-restricted point, but instead detects the location of the bypass route. In this case, because the location of the bypass route is detected by the current location detector 10, the answer in step 200 becomes no.

On the other hand, in a case in which the vehicle can pass through a traffic-restricted point, even though the traffic information indicates that the point is under a traffic restriction, the current location detector 10 detects the traffic-restricted point as the current location. In this case, because the traffic-restricted point is detected, the answer in step 200 becomes yes.

In the next step 210, in response to the decision in step 210, the current time, the traffic-restricted point, the length of the traffic restriction, and the passage time (the time needed to pass through the traffic-restricted point) are output in accordance with detection information output from the current location detector 10. In this process, the traffic-restricted point, the length of the traffic restriction, and the passage time are stored as history information, in addition to the existing (previously stored) history information, in the storage device 40.

When the vehicle starts its current travel running after the above-described information has been recorded, the microcomputer 30 starts executing, by using the CPU therein, the main control program according to the flow chart shown in Figs. 2 to 4. If no display command is input via the input device 20, step 100 shown in Fig. 2 is performed repeatedly, and a negative decision is made each time.

In this state, if a command to display a particular map is input via the input device 20, then the answer in step 100 becomes yes. Thus, in the next step 101, map data representing the specified map (hereinafter, referred to as specified map data) is read from the storage device 40. More specifically, the specified map data is read from the database stored in the storage device 40. In the next step 102, the specified map is displayed. More specifically, in accordance with the map data, the specified map is displayed on the display panel of the display 60.

After completion of step 102, it is determined in step 110 whether the traffic restriction information has been updated in step 210 in accordance with information received from the external information source 70 via the radio communication device 60. The traffic restriction information includes information indicating the traffic-restricted point (such as a congested point, a point where construction is being performed, or a point where an accident has occurred), the length of the traffic restriction, and the passage time (time in transit through the restricted length of road).

If the traffic restriction information supplied from the external source 70 has not been updated, a negative decision is made in step 110. Conversely, if the traffic restriction information supplied from the external source 70 has been newly updated, an affirmative decision is made in step 110. In this case, the process proceeds to step 111 in which the newly updated traffic restriction information (hereinafter, referred to as new traffic restriction information) is displayed. That is, the display 60 displays the new traffic restriction information on the display panel of the display 60. In a case in which the new traffic restriction information includes information associated with two or more traffic-restricted points, information associated with all traffic-restricted points is displayed.

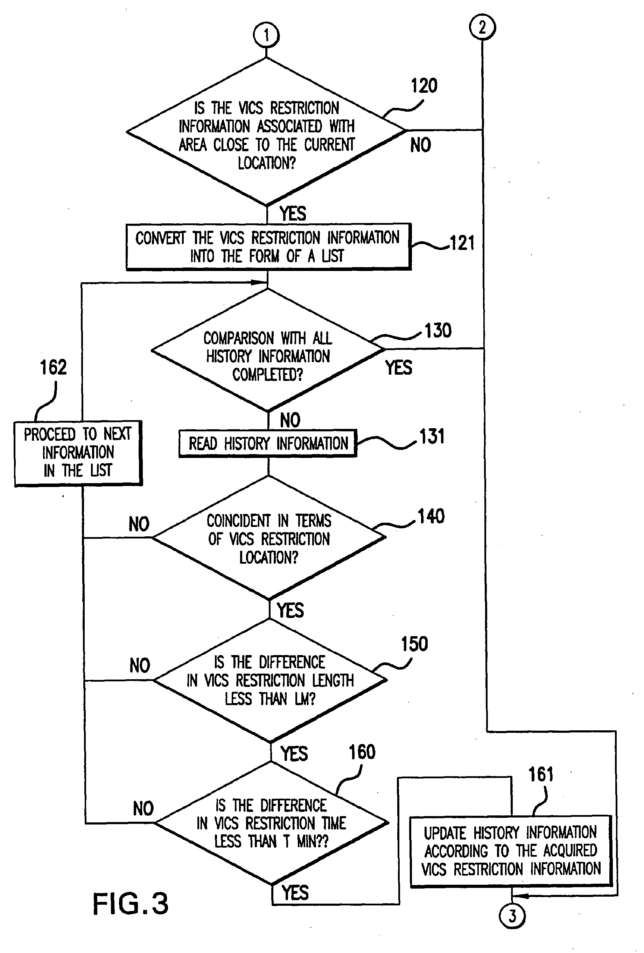

After completion of step 111, the process proceeds to step 120 shown in Fig. 3. In step 120, it is determined whether the new traffic restriction information includes information associated with a region near the current location of the vehicle on the displayed map. If no restricted location indicated by the new traffic restriction information is in a region close to the current location of the vehicle, a negative decision is made in step 120. However, if the new traffic restriction information includes information associated with a point in a region close to the current location of the vehicle, a positive decision is made in step 120. In this case, the process proceeds to step 121 in which the new traffic information is converted into the form of a list.

After completion of step 121, the process proceeds to step 130 in which it is determined whether comparison of the new traffic restriction information with the history information is completed. In this specific situation, the comparison is not completed, and a negative decision is made in step 130. Thus, in step 131, the history information is read from the storage device 40.

Thereafter, in steps 140 to 160, the new traffic restriction information is compared with the history information read from the storage device 40.

More specifically, in step 140, it is determined whether the new traffic restriction information is identical with the history information in terms of a traffic-restricted point. If it is determined herein that the information is identical in terms of the traffic-restricted point, then, in the next step 150, it is determined whether the new traffic restriction information is identical with the history information in terms of the length of the traffic restriction (length of road restricted). In this comparison, if the difference in the length of traffic restriction is less than 1 m, an affirmative decision is made in this step 150. That is, when the difference is less than 1 m, the length of the traffic restriction can be regarded as being equal between the new traffic restriction information and the history information.

In the case in which an affirmative decision is made in step 150, the process proceeds to step 160. In step 160, it is determined whether the new traffic restriction information is identical with the history information in terms of the passage time (time in traversing the length of the restricted road). If the difference in passage time, i.e., time required to pass though the traffic-restricted point, is less than t min, an affirmative decision is made in step 160. That is, if the difference is less than t min, the new traffic restriction information and the history information are regarded being equal to each other in terms of the passage time needed to pass though the traffic-restricted point.

In the case in which an affirmative decision is made in step 160, the process proceeds to step 161. In step 161, the new restriction information is stored as the history information in the storage device 40, thereby updating the history information.

That is, in this specific case, when it is determined in step 200 that the vehicle has passed through a traffic-restricted point, the new traffic restriction information is determined to be identical to the history information, and thus the traffic-restricted point is a point that was passed through in the past. This means that, although the new traffic restriction information is not precise enough and indicates that the traffic-restricted point is difficult to pass through, the history information indicates that this point can be passed through. Thus, by storing the new traffic restriction information as history information in the storage device 40, it becomes possible to pass through a point that traffic information indicates as being under traffic restriction.

Take as a specific example the case in which the new traffic restriction information indicates that, of two lanes of an expressway, one of which is connected to an exit lane, the lane that is not connected to the exit lane is congested and the other of the two lanes is passable.

In this case, if a negative decision is made in one of steps 140, 150, and 160, the process proceeds to step 162 to perform the process on the next item of information in the list. Herein, if an affirmative decision is made in step 130, steps 140 to 160 are performed in a similar manner as described above. If an affirmative decision is made in step 160, step 161 is performed in a similar manner as described above. In a case in which a negative decision is made in one of steps 140, 150, and 160, step 162 is performed.

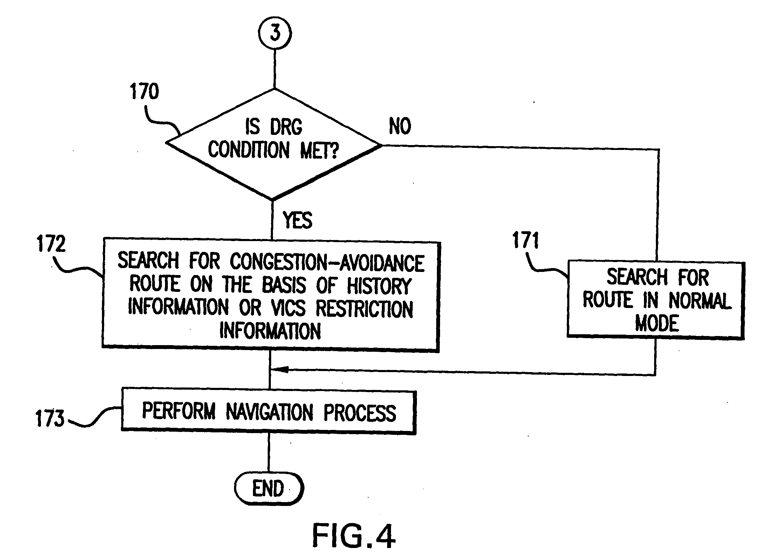

In the above-described process, if any one of the following conditions is met, (1) an affirmative decision is made in step 130, (2) a negative decision is made in step 161 or 120, or (3) a negative decision is made in step 110, then the process proceeds to step 170 (Fig. 4). In step 170, it is determined whether a dynamic root guidance (DRG) condition is met. If the DRG condition is not met, a negative decision is made in step 170. In this case, in step 171, a travel route is searched for in a normal mode. On the other hand, if an affirmative decision is made in step 170, the process proceeds to step 172 in which a passable route is searched for in accordance with the history information or current traffic restriction information that has not yet been stored as history information.

If the passable route search in step 172 is performed, not simply on the basis of traffic restriction information, but taking into account the history information, the passable route search can be performed over a wider area. This makes it possible to find a passable route that is more suitable than can be found in accordance with only the history information.

In step 173, a travel route is suggested in accordance with the result of the search in step 171 or 172, and navigation is performed for guidance along the route. In the case in which the navigation is performed according to the results of the search in step 172, the navigation provides guidance along a passable route even when the traffic restriction information indicates that the route is difficult to pass through or even when no traffic restriction information associated with that route is available.

In the present embodiment of the invention, if the vehicle encounters a congested point for which traffic restriction information does not indicate a traffic restriction, and thus if a bypass route is selected to avoid the congested point, information associated with the congested point is recorded as history information thereby making possible avoidance of that point in future travel.

Note that the external source 70 for current traffic information referred to in the above-described embodiments of the present invention may be a Traffic Message Channel as used in Europe or a vehicle information and communication system known in Japan as VICS, for example.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A vehicle navigation method for a vehicle comprising the steps of:
responsive to vehicle travel along a particular route passing through a restricted location that road traffic restriction information indicates as having a traffic restriction, recording information associated with the restricted location as traffic restriction history information; and
in subsequent travel toward the restricted location, after the traffic restriction history information has been recorded, searching for a passable route utilizing both current road traffic restriction information and the previously recorded traffic restriction history information.

2. A vehicle navigation method according to claim 1 wherein said searching is for a route bypassing the restricted location.

3. A vehicle navigation method according to claim 1 or 2, wherein the traffic restriction history information includes information indicating a time at which the vehicle arrived at the restricted location and information indicating the length of time required to pass through the restricted location.

4. A vehicle navigation method comprising the steps of:
responsive to vehicle travel along a particular route passing through a restricted location that road traffic restriction information indicates as having a traffic restriction, recording information associated with the restricted location as traffic restriction history information; and
in subsequent travel toward the restricted location, after the traffic restriction history information has been recorded, determining if current road traffic restriction information is identical with the recorded traffic restriction history; and
responsive to a determination that current road traffic information is identical to the recorded traffic restriction history information, searching for a passable route on the basis of the traffic restriction history information.

5. A vehicle navigation method according to claim 4 wherein said searching is for a route bypassing the restricted location.

6. A vehicle navigation method according to claim 4 or 5, wherein the traffic restriction history information includes information indicating a time at which the vehicle arrived at the restricted location and information indicating the length of time required to pass through the restricted location.

7. A vehicle navigation method comprising the steps of:
responsive to vehicle travel along a route for which traffic information is not currently provided, if the vehicle encounters difficulty in passing through a location on the route, recording information indicating the location and a time at which the vehicle encountered the difficulty as traffic restriction history information; and
in subsequent travel toward the location, after the traffic restriction history information has been recorded, searching for a passable route on the basis of the traffic restriction history information.

8. A vehicle navigation method according to claim 7 wherein said searching is for a route bypassing the location.
